# EUROPEAN PATENT SPECIFICATION

(11) **EP 1 818 375 B1**
(45) Date of publication and mention of the grant of the patent: **28.03.2012**
(21) Application number: 07250560.5
(22) Date of filing: 12.02.2007
(51) Int. Cl.: C09D 11/00

(54) **Ink for ink-jet recording, ink-jet recording apparatus, method of treating nickel-containing metal, treatment agent of nickel-containing metal, and use of a polymer for the manufacture of a treatment agent of nickel-containing metal**
Vorrichtung und Tinte für Tintenstrahlaufzeichnung, Verfahren zur Bearbeitung von nickelhaltigem Metall und Behandlungssubstanz für nickelhaltiges Metall und Einsatz eines Polymers für die Herstellung der Behandlungssubstanz von nickelhaltigem Metall
Encre pour enregistrement à jet d'encre, appareil d'enregistrement à jet d'encre, procédé de traitement du métal contenant du nickel, agent de traitement du métal contenant du nickel, et utilisation d'un polymère pour la fabrication d'un agent de traitement de métal contenant du nickel

(30) Priority: 13.02.2006 JP 2006035823
(43) Date of publication of application: 15.08.2007
(73) Proprietor: Brother Kogyo Kabushiki Kaisha, Nagoya-shi, Aichi 467-8561 (JP)
(72) Inventor: Sugimoto, Junichiro c/o Intellectual Property Dpt.., Mizuho-ku, Nagoya-shi, Aichi 467-8562 (JP); Fujioka, Masaya c/o Intellectual Property Dpt., Mizuho-ku, Nagoya-shi, Aichi 467-8562 (JP); Goto Kazuma c/o Intellectural Property Dpt., Mizuho-ku, Nagoya-shi, Aichi 467-8562 (JP)
(74) Representative: Duckworth, Timothy John

(56) References cited:
- WO-A-02/38669
- WO-A-2004/074372
- DE-A1- 3 115 532
- GB-A- 1 253 080
- US-A- 4 597 794
- US-A- 5 900 899
- US-A- 5 969 005
- US-A- 5 973 025
- US-A- 6 051 645
- US-A1- 2004 257 418
- US-A1- 2005 254 987
- US-A1- 2006 023 042

## Description

The present invention relates to a method of delaying the occurrence of corrosion and/or reducing the amount of corrosion of an ink-jet-head.

Conventionally, nickel-containing metal is used for various electronic components and electrical components. For ink-jet heads of ink-jet recording apparatuses, nickel-containing metal is used, for example. However, the nickel-containing metal has a corrosion problem. In order to solve the corrosion problem, there is a method of adding a pH adjuster to an ink for ink-jet recording (Japanese Patent Application Laid-open No.5-125306). In the aforementioned method, the pH of the ink is adjusted so that the ink is weak alkaline or neutral.

However, in the aforementioned method, the pH of the ink changes and the ink becomes acidic over time. Accordingly, in the aforementioned method, the nickel-containing metal of the ink-jet head is corroded.

The present invention relates to a method of delaying the occurrence of corrosion and/or reducing the amount of corrosion of an ink-jet head provided with an ink flow passage formed of nickel-containing metal in an ink-jet recording apparatus, said method comprising ejecting an ink from the ink-jet head, wherein the ink comprises: water; a coloring agent; and a polymer which comprises at least one of an alkali metal salt of a polyacrylic acid and an ammonium salt of a polyacrylic acid.
FIG 1 is a perspective view showing an ink-jet head ;
FIG. 2 is an exploded fragmentary perspective view showing an ink-jet head;
FIG. 3 is an exploded fragmentary enlarged perspective view showing a cavity unit;
FIG 4 is an enlarged elevational view in cross section taken in a plane parallel to a IV-IV direction indicated in FIG. 1;
FIG 5 is an elevational view in cross section showing a piezoelectric actuator;
FIG 6 is a schematic perspective view showing a configuration of an ink-jet recording apparatus body having an ink cartridge which contains ink prepared in examples of the invention.

The method of the present invention delays occurrence of corrosion of nickel-containing metal and/or reduce the amount of corrosion of nickel-containing metal.

In the present invention, the nickel-containing metal is not limited. The nickel-containing metal is a metal containing nickel alone, for example. The nickel-containing metal is, for example, an alloy containing nickel and a metal other than nickel (a nickel-containing alloy). Examples of the metal other than nickel include iron, carbon, chromium, molybdenum, copper, aluminium, titanium, niobium, tantalum, cobalt, tungsten, silicon, nitrogen, sulfer, manganese, etc. In the nickel-containing alloy, the metal other than nickel is, for example, of one type or of at least two types. In the nickel-containing alloy, the nickel content is not particularly limited. The nickel content is, for example, in the range of 1 to 99.5% by weight.

The nickel content is preferably in the range of 10 to 70% by weight. The nickel-containing alloy is, for example, an alloy containing nickel and iron (a nickel-iron alloy). Examples of the nickel-iron alloy include 42 alloy. In the 42 alloy, the nickel content is approximately 42%. In the 42 alloy, the iron content is approximately 58%. The nickel-containing alloy may contain components other than metals.

In the polymer, it is preferable that the ratio (salt forming ratio) at which the carboxyl groups are changed to -COOM be as high as possible. The salt forming ratio is most preferably 100%. The carboxyl groups include carboxyl group precursors. Examples of the carboxyl group precursors include an alkoxycarbonyl group. The aforementioned -COOM are in at least one of an ionized state (an ion state) and an unionized state (a salt state) in the ink. The ion state is indicated as -COO⁻ and M⁺ , for example. The alkali metal salt and ammonium salt (described later) that are specific examples of the aforementioned polymer also are in at least one of an ionized state (an ion state) and an unionized state (a salt state) in the ink.

Examples of the alkali metal ion include a lithium ion, a sodium ion, a potassium ion, etc. On the other hand, examples of the ammonium ion include NH₄⁺, a monoalkylammonium ion, a dialkylammonium ion, a trialkylammonium ion, a tetraalkylammonium ion, etc. Two or more Ms contained in the same polymer are identical to or different from each other. The form of the Ms contained in the same polymer is not limited.
Examples of the form of the Ms contained in the same polymer include the following forms (a) to (e). However, the present invention is not limited to the following forms (a) to (e). The present invention also includes forms other than the following forms (a) to (e).
(a) One M is an alkali metal ion. The other Ms are ammonium ions.
(b) One M is an ammonium ion. The other Ms are alkali metal ions.
(c) At least two Ms are all alkali metal ions or ammonium ions.
(d) One M is a specific alkali metal ion (for instance, Na⁺). The other Ms are alkali metal ions (for example, Li⁺) other than the aforementioned specific alkali metal ion.
(e) One M is a specific ammonium ion (for instance, NH⁴⁺). The other Ms are ammonium ions (for example, monoalkylammonium ions) other than the aforementioned specific ammonium ion.

The polymerization degree (n) of the polymer is not particularly limited. The polymerization degree (n) of the polymer is in the range of 20 to 10000, for example. The weight average molecular weight (Mw) of the polymer also is not particularly limited. The weight average molecular weight (Mw) of the polymer is in the range of 2000 to 1000000, for example. The weight average molecular weight (Mw) of the polymer can be measured by a gel permeation chromatograph (GPC) method using a tetrahydrofuran solvent.

Preferably, the alkali metal salt of polyacrylic acid contains a repeating unit represented by the following formula (1). 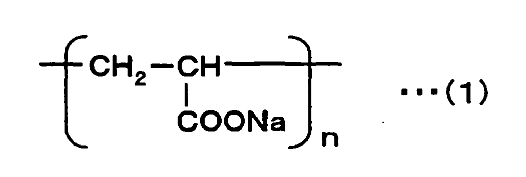 In the formula (1), *n* denotes a positive integer. For instance, *n* is a number in the range of 20 to 10000.

Preferably, the ammonium salt of polyacrylic acid contains a repeating unit represented by the following formula (2). 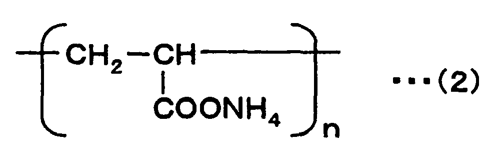 In the formula (2), *n* denotes a positive integer. For instance, *n* is a number in the range of 20 to 10000.

It also is possible to allow -COOM to exist in the ink by allowing a suitable base (for instance, NaOH, LiOH, etc.) together with polycarboxylic acid to be contained in the ink. In this case, the aforementioned polymer is the polycarboxylic acid.

The ratio of the polymer to the total amount of the ink (polymer ratio) is not limited. Preferably, the polymer ratio is in the range of 0.01 to 1% by weight. The polymer ratio in the aforementioned preferable range further can promote the reduction in the amount of corrosion or the delay of occurrence of corrosion of the nickel-containing metal, for example. Furthermore, the polymer ratio in the aforementioned preferable range allows the viscosity of the ink to be adjusted to a further preferable range, for example. The ink having a viscosity in the aforementioned preferable range allows the ejection stability of the ink to further be improved. The polymer ratio is more preferably in the range of 0.01 to 0.5% by weight.

The pH of the ink for ink-jet recording(ink pH) is not limited. The ink pH is preferably in the range of 6 to 9. The ink pH in the preferable range can prevent aggregation of the coloring agent satisfactorily, for example. In addition, the ink pH in the preferable range can satisfactorily prevent, for example, the materials forming the ink-jet head from eluting into the ink. The ink-jet head includes, for example, rubber members and members formed of organic materials other than rubber materials. Examples of the rubber members include a wiper and a cap. The wiper can wipe the nozzle surface of the ink-jet head, for example. The cap can isolate the nozzle surface from the external environment, for example. The prevention of the materials forming the ink-jet head from eluting into the ink can satisfactorily prevent deposition of the eluted matters in the ink, for example. Furthermore, the prevention of the deposition of the eluted matters can satisfactorily prevent, for instance, the nozzle of the ink-jet head from being clogged.

The weight ratio (A: B) between the polymer (A) and the coloring agent (B) is not particularly limited. The ratio (A: B) is preferably in the range of 0.002 : 1 to 0.5 : 1. The ratio (A : B) in the preferable range further can promote both the reduction in the amount of corrosion and the delay of occurrence of corrosion of the nickel-containing metal, for example. Moreover, the ratio (A : B) in the preferable range further can improve, for example, the dispersion stability of the coloring agent.

Preferably, the ink for ink-jet recordingfurther contains a benzotriazole derivative. The ink containing the benzotriazole derivative further can promote both the reduction in the amount of corrosion and the delay of occurrence of corrosion of the nickel-containing metal, for example. The amount of the benzotriazole derivative is not particularly limited. The amount of the benzotriazole derivative is, for instance, in the range of 0.01 to 0.5% by weight with respect to the total amount of the ink. Examples of the benzotriazole derivative include 1,2,3-benzotriazole, 4-nitrobenzotriazole, 5-nitrobenzotriazole, etc. One of the benzotriazole derivatives may be used alone. Two or more of the benzotriazole derivatives may be used in combination.

The water is not particularly limited. In the present invention, it is preferable that deionized water be used. The ratio of the water to the total amount of the ink is not particularly limited. The ratio of the water can be determined suitably according to the composition of the other components contained in the ink or desired characteristics of the ink, for example. The ratio of the water to the total amount of the ink (water ratio) is, for instance, in the range of 10 to 95% by weight. The water ratio is preferably in the range of 10 to 80% by weight. The water ratio is further preferably in the range of 40 to 80% by weight.

The coloring agent is not limited. Examples of the coloring agent include dyes, pigments, etc. Preferably, the coloring agent is a pigment, for example. The pigment has, for instance, excellent light-fastness. In the ink for ink-jet recording that contains the pigment used therein, particularly, nickel-containing metal tends to corrode. The ink of the present invention contains the polymer. Hence, even when containing a pigment, the ink of the present invention can delay occurrence of corrosion of the nickel-containing metal, for example. Similarly, the ink of the present invention can reduce the amount of corrosion, for example.

The pigment is not limited. The pigment is, for instance, at least one of an inorganic pigment and an organic pigment. Examples of the pigments preferred for black-and-white recording include carbon blacks, metal oxides, organic pigments, etc. Examples of the carbon blacks include furnace black, lamp black, acetylene black, channel black, etc. Examples of the metal oxides include titanium oxide, etc. Examples of the organic pigment include orthonitroaniline black, etc.

Examples of the pigments preferred for color recording include Toluidine Red, Permanent Carmine FB, Fast Yellow AAA, Disazo Orange PMP, Lake Red C, Brilliant Carmine 6B, Phthalocyanine Blue, Quinacridone Red, Dioxane Violet, Victoria Pure Blue, Alkaline Blue Toner, Fast Yellow 10G, Disazo Yellow AAOT, Disazo Yellow AAMX, Disazo Yellow HR, Disazo Yellow AAOA, Yellow Iron Oxide, Orthonitroaniline Orange, Dinitroaniline Orange, Vulcan Orange, Toluidine Red, Chlorinated Para Red, Brilliant Fast Scarlet, Naphthol Red 23, Pyrazolone Red, Barium Red 2B, Calcium Red 2B, Strontium Red 2B, Manganese Red 2B, Barium Lissome Red, Pigment Scarlet 3B Lake, Lake Bordeaux 10B, Anthosin 3B Lake, Anthosin 5B Lake, Rhodamine 6G Lake, Eosin Lake, red iron oxide, Naphthol Red FGR, Rhodamine B Lake, Methyl Violet Lake, Dioxazine Violet, Basic Blue 5B Lake, Basic Blue 6G Lake, Fast Sky Blue, Alkaline Blue R Toner, Peacock Blue Lake, Prussian Blue, Ultramarine, Reflex Blue 2G, Reflex Blue R, Brilliant Green Lake, Diamond Green Thioflavine Lake, Phthalocyanine Green G, Green Gold, Phthalocyanine Green Y, iron oxide, rust powder, zinc oxide, titanium oxide, calcium carbonate, clay, barium sulfate, alumina white, aluminum, bronze, daylight fluorescent pigment, pearl pigment, Naphthol Carmine FB, Naphthol Red M, Permanent Carmine FB, Fast Yellow G, Disazo Yellow AAA, Alkaline Blue G Toner, etc. The pigments to be used in the present invention include a surface-modified pigment. The surface-modified pigment is obtained by treating the surface of the pigment with a specific functional group.

The ratio of the pigments to the total amount of the ink (pigment ratio) is not limited. The pigment ratio can be determined suitably according to a desired printing density or coloration, for example. The pigment ratio is, for instance, in the range of 0.1 to 20% by weight. The pigment ratio is preferably in the range of 0.3 to 15% by weight.

The dyes are not limited. Examples of the dyes include water-soluble dyes. Examples of the water-soluble dyes include direct dyes, acid dyes, basic dyes, reactive dyes, etc. Examples of the dyes include C. I. Direct Black, C. I. Direct Blue, C. I. Direct Red, C. I. Direct Yellow, C. I. Direct Orange, C. I. Direct Violet, C. I. Direct Brown, C. I. Direct Green, C. I. Acid Black, C. I. Acid Blue, C. I. Acid Red, C. I. Acid Yellow, C. I. Acid Orange, C. I. Acid Violet, C. I. Basic Black, C. I. Basic Blue, C. I. Basic Red, C. I. Basic Violet, C. I. Food Black, etc. Examples of the C. I. Direct Black include C. I. Direct Black 17, 19, 32, 51, 71, 108, 146, 154, 168, etc. Examples of the C. I. Direct Blue include C.I. Direct Blue 6, 22, 25, 71, 86, 90, 106, 199, etc. Examples of the C. I. Direct Red include C. I. Direct Red 1, 4, 17, 28, 83, 227, etc. Examples of the C. I. Direct Yellow include C. I. Direct Yellow 12, 24, 26, 86, 98, 132, 142, etc. Examples of the C. I. Direct Orange include C. I. Direct Orange 34, 39, 44, 46, 60, etc. Examples of the C. I. Direct Violet include C. I. Direct Violet 47, 48, etc. Examples of the C. I. Direct Brown include C. I. Direct Brown 109, etc. Examples of the C. I. Direct Green include C. I. Direct Green 59, etc. Examples of the C. I. Acid Black include C. I. Acid Black 2, 7, 24, 26, 31, 52, 63, 112, 118, etc. Examples of the C. I. Acid Blue include C. I. Acid Blue 9, 22, 40, 59, 93, 102, 104, 117, 120, 167, 229, 234, etc. Examples of the C. I. Acid Red include C. I. Acid Red 1, 6, 32, 37, 51, 52, 80, 85, 87, 92, 94, 115, 180, 256, 289, 315, 317, etc. Examples of the C. I. Acid Yellow include C. I. Acid Yellow 11, 17, 23, 25, 29, 42, 61, 71, etc. Examples of the C. I. Acid Orange include C. I. Acid Orange 7, 19, etc. Examples of the C. I. Acid Violet include C. I. Acid Violet 49, etc. Examples of the C. I. Basic Black include C. I. Basic Black 2, etc. Examples of the C. I. Basic Blue include C. I. Basic Blue 1, 3, 5, 7, 9, 24, 25, 26, 28, 29, etc. Examples of the C. I. Basic Red include C. I. Basic Red 1, 2, 9, 12, 13, 14, 37, etc. Examples of the C. I. Basic Violet include C. I. Basic Violet 7, 14, 27, etc. Examples of the C. I. Food Black include C. I. Food Black 1, 2, etc. The preferable dyes are excellent in characteristics such as, for instance, vividness, water solubility, stability, and light-fastness.

The ratio of the dyes to the total amount of the ink (dye ratio) is not limited. The dye ratio is, for example, in the range of 0.1 to 20% by weight.

One of the coloring agents may be used alone. Two or more of the coloring agents may be used in combination.

Preferably, the ink for ink-jet recording further contains a surfactant. The surfactant can adjust the surface tension of the ink, for example. The adjustment of the surface tension allows the ejection stability of the ink and the text printing quality to further be improved. The surfactant is not limited. Examples of the surfactant include anionic surfactants produced by Kao Corporation such as EMAL® series, LATEMUL® series, VENOL® series, NEOPELEX® series, NS SOAP, KS SOAP, OS SOAP, PELEX® series, etc. Examples of the surfactant also include anionic surfactants produced by Lion Corporation such as LIPOLAN® series, LIPON® series, SUNNOL® series, LIPOTAC® TE, ENAGICOL® series, LIPAL® series, LOTAT® series, etc. Furthermore, examples of the surfactant include nonionic surfactants produced by Kao Corporation such as EMULGEN® series, RHEODOL® series, EMASOL® series, EXCEL® series, EMANON® series, AMIET® series, AMINON® series, etc. Examples of the surfactant further include nonionic surfactants produced by Lion Corporation such as DOBANOX® series, LEOCOL® series, LEOX® series, LAOL, LEOCON® series, LIONOL® series, CADENAX® series, LIONON® series, LEOFAT® series, etc. One of the surfactants may be used alone. Two or more of the surfactants may be used in combination.

Preferably, the surfactant contains at least one of an acetylene glycol surfactant represented by the following formula (5) and a polyoxyethylene alkyl ether anionic surfactant represented by the following formula (6). 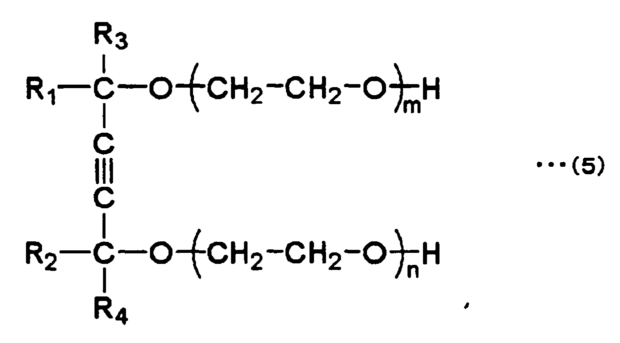 In the formula (5), *m* and *n* indicate numbers that satisfy m + n = 0 to 50. In the formula (5), R₁, R₂, R₃, and R₄ are identical to or different from each other. The aforementioned R₁, R₂, R₃, and R₄ each denote an alkyl group. The alkyl group has a carbon number in the range of 1 to 5. The alkyl group is a straight-chain alkyl group or a branched-chain alkyl group. The aforementioned *m* and *n* are preferably numbers that satisfy m + n = 1 to 30. The aforementioned *m* and *n* are more preferably numbers that satisfy m+ n = 1 to 10. Examples of the alkyl group include a methyl group, an ethyl group, a propyl group, an isopropyl group, a butyl group, etc. 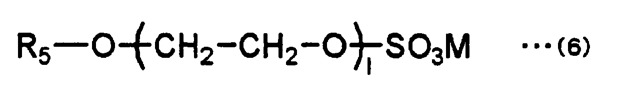 In the formula (6), R₅ denotes an alkyl group. The alkyl group has a carbon number in the range of 12 to 15. The alkyl group is a straight-chain alkyl group or a branched-chain alkyl group. In the formula (6), M indicates Na⁺ or [NH(CH₂CH₂OH)₃]⁺. In the formula (6), I denotes a number in the range of 2 to 4. Examples of the alkyl group include a dodecyl group (with a carbon number of 12), a tridecyl group (with a carbon number of 13), etc.

The total amount of the surfactant to be added is not particularly limited. The total amount is preferably in the range of 0.002 to 1% by weight with respect to the total amount of the ink. The preferable total amount allows the penetrability of the ink into a recording paper surface to be more suitable, for example. The suitable penetrability allows, for example, the text printing quality to further be improved. The total amount is more preferably in the range of 0.002 to 0.5% by weight. The total amount is further preferably in the range of 0.002 to 0.3% by weight.

The amount of acetylene glycol surfactant represented by the aforementioned formula (5) to be added (formula (5) amount) is, for instance, in the range of 0.01 to 1% by weight with respect to the total amount of the ink. The formula (5) amount is preferably in the range of 0.01 to 0.3% by weight. The formula (5) amount is more preferably in the range 0.05 to 0.2% by weight. The amount of polyoxyethylene alkyl ether anionic surfactant represented by the aforementioned formula (6) to be added (formula (6) amount) is, for instance, in the range of 0.002 to 1% by weight with respect to the total amount of the ink. The formula (6) amount is preferably in the range of 0.002 to 0.2% by weight. The formula (6) amount is more preferably in the range of 0.005 to 0.15% by weight.

Preferably, the ink for ink-jet recording further contains a water-soluble organic solvent. The water-soluble organic solvent includes, for instance, a penetrant and a humectant. The penetrant increases the drying rate of the ink on a recording paper surface, for example. On the other hand, the humectant prevents the ink from drying at the tip of the ink-jet head.

The penetrant is not limited. Examples of the penetrant include ethylene glycol ether penetrants, propylene glycol ether penetrants, etc. Examples of the ethylene glycol ether penetrants include ethylene glycol methyl ether, ethylene glycol ethyl ether, ethylene glycol propyl ether, diethylene glycol methyl ether, diethylene glycol ethyl ether, diethylene glycol propyl ether, triethylene glycol methyl ether, triethylene glycol ethyl ether, triethylene glycol propyl ether, etc. Examples of the propylene glycol ether penetrants include propylene glycol methyl ether, propylene glycol ethyl ether, propylene glycol propyl ether, dipropylene glycol methyl ether, dipropylene glycol ethyl ether, dipropylene glycol propyl ether, tripropylene glycol methyl ether, tripropylene glycol ethyl ether, tripropylene glycol propyl ether, etc. For the penetrant, the propylene glycol ether penetrants are preferred. The propylene glycol ether penetrants can control the penetrability of the ink even if used in a small amount.

The amount of the penetrant to be added is not particularly limited. The amount of the penetrant to be added is, for instance, in the range of 0.2 to 10% by weight with respect to the total amount of the ink. The amount of the penetrant to be added is preferably in the range of 0.2 to 5% by weight. The amount of the penetrant to be added is more preferably in the range of 0.4 to 3% by weight. The amount of the propylene glycol ether penetrant to be added is, for instance, in the range of 0.4 to 2.5% by weight with respect to the total amount of the ink.

The humectant is not limited. Examples of the humectant include lower alcohols, amides, ketones, ketoalcohols, ethers, polyalcohols, 2-pyrrolidone, N-methyl-2-pyrrolidone, 1,3-dimethyl-2-imidazolidinone, etc. Examples of the lower alcohols include methyl alcohol, ethyl alcohol, n-propyl alcohol, isopropyl alcohol, n-butyl alcohol, sec-butyl alcohol, tert-butyl alcohol, etc. Examples of the amides include dimethylformamide, dimethylacetamide, etc. Examples of the ketones include acetone, etc. Examples of the ketoalcohols include diacetone alcohol, etc. Examples of the ethers include tetrahydrofuran, dioxane, etc. Examples of the polyalcohols include polyalkylene glycol, alkylene glycol, glycerin, etc. Examples of the polyalkylene glycol include polyethylene glycol, polypropylene glycol, etc. Examples of the alkylene glycol include ethylene glycol, propylene glycol, butylene glycol, diethylene glycol, triethylene glycol, dipropylene glycol, tripropylene glycol, thiodiglycol, hexylene glycol, etc. Preferably, the humectant is polyalcohol. It is preferable that the polyalcohol be alkylene glycol, glycerin, etc.

The amount of the humectant to be added is not particularly limited. The amount of the humectant to be added is, for instance, in the range of 0 to 95% by weight with respect to the total amount of the ink: The amount of the humectant to be added is preferably in the range of 5 to 80% by weight. The amount of the humectant to be added is further preferably in the range of 5 to 50% by weight.

One of the water-soluble organic solvents may be used alone. Two or more of the water-soluble organic solvents may be used in combination.

Preferably, the ink for ink-jet recordingfurther contains a pH adjuster. Examples of the pH adjuster include triethanolamine, diethanolamine, monoethanolamine, etc. Preferably, the pH adjuster is triethanolamine. The triethanolamine has an excellent handling property. One of the pH adjusters may be used alone. Two or more of the pH adjusters may be used in combination.

The viscosity of the ink of the present invention is not limited. The viscosity of the ink is preferably in the range of 2.5 to 2.7 mPa•s. The viscosity of the ink in the preferable range further can improve the stability in ejecting the ink from the ink-jet head, for example. The viscosity of the ink is measured, for instance, with a rotary viscometer. The measurement conditions include, for example, a temperature of 25°C and a rotation speed of 60 rpm. The rotary viscometer is, for example, a rotary viscometer (for example, a Brookfield's viscometer (Model: DV-II+)). The viscosity of the ink can be adjusted by at least one of the following methods: adjusting the composition of the ink components; and adding of a viscosity-adjusting agent. Examples of the viscosity-adjusting agent include polyvinyl alcohol, cellulose, water-soluble resin, etc.

The ink for ink-jet recording further contains a conventionally known additive as required. Examples of the additive include a surface tension modifier and an antifungal agent.

Next, the ink-jet recording apparatus includes an ink-jet head and an ink tank. The ink-jet head can eject an ink. The ink tank can accommodate the ink. The ink-jet head includes an ink flow passage. The ink flow passage is formed of nickel-containing metal. The ink is an ink for ink-jet recording of the present invention. Preferably, the ink tank is a replaceable ink cartridge. The ink-jet recording apparatus of the present invention is characterized in that the ink flow passage is formed of nickel-containing metal and the ink is an ink for ink-jet recording of the present invention. In the ink-jet recording apparatus of the present invention, for example, the configuration and arrangement other than those of the ink flow passage and the ink are not limited. In the ink-jet recording apparatus of the present invention, the configurations of, for instance, the ink-jet head, the ink tank, a paper transporting system, a control system, etc. can be the same as those employed conventionally. In the ink-jet recording apparatus of the present invention, the ink ejecting method that is employed for the ink-jet head is not limited. Examples of the ink ejecting method include an electrostatic attraction method, a piezoelectric element method, and a bubble-jet method. In the electrostatic attraction method, electrostatic force generated through high voltage application allows an ink to be ejected. In the piezoelectric element method, an ink is subjected to mechanical vibration or displacement that is caused by a piezoelectric element and thereby the ink is ejected. In the bubble-jet method, the foaming pressure generated by heating an ink allows the ink to be ejected.

An embodiment of an ink-jet head will be described below with reference to the accompanying drawings.

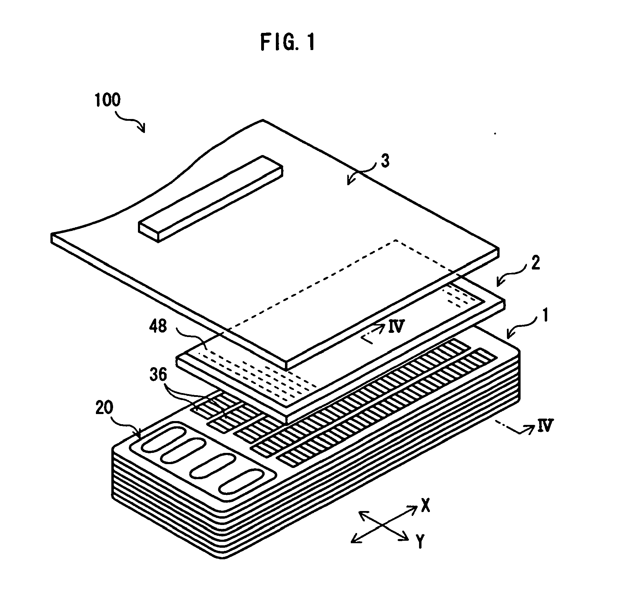

An ink-jet head 100 shown in FIG. 1 has the following configuration. That is, a plate-type piezoelectric actuator 2 is joined to a cavity unit 1, while a flexible flat cable 3 is superposed on and welded to the upper surface (back face) of the plate-type piezoelectric actuator 2. The cavity unit 1 is composed of a plurality of metal plates. The flexible flat cable 3 is used for connecting the ink-jet head 100 to an external instrument. Inks are discharged downwardly from nozzles 4 perforated on the bottom surface (front face) side of the cavity unit 1.

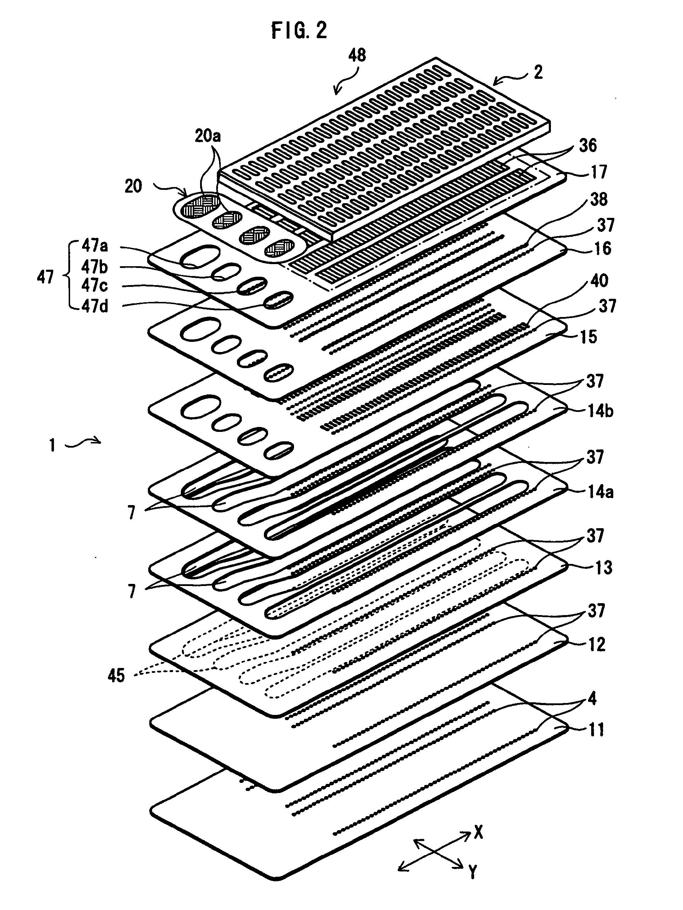

As shown in FIG. 2, this cavity unit 1 has the following configuration. That is, eight thin plates are superposed on and joined to each other using an adhesive. The eight thin plates include a nozzle plate 11, a spacer plate 12, a damper plate 13, two manifold plates 14a and 14b, a supply plate 15, a base plate 16, and a cavity plate 17.

Each of the plates 11 to 17 generally has a thickness of 50 to 150 µm. The nozzle plate 11 is formed of a synthetic resin such as polyimides. Each of the other plates 12 to 17 generally is made of a 42 % nickel alloy steel plate. In the nozzle plate 11, a number of nozzles 4 for ink discharge each having a micro size are perforated at minute intervals. The nozzles 4 are arranged in five lines in parallel to the long side direction (X direction) in the nozzle plate 11.

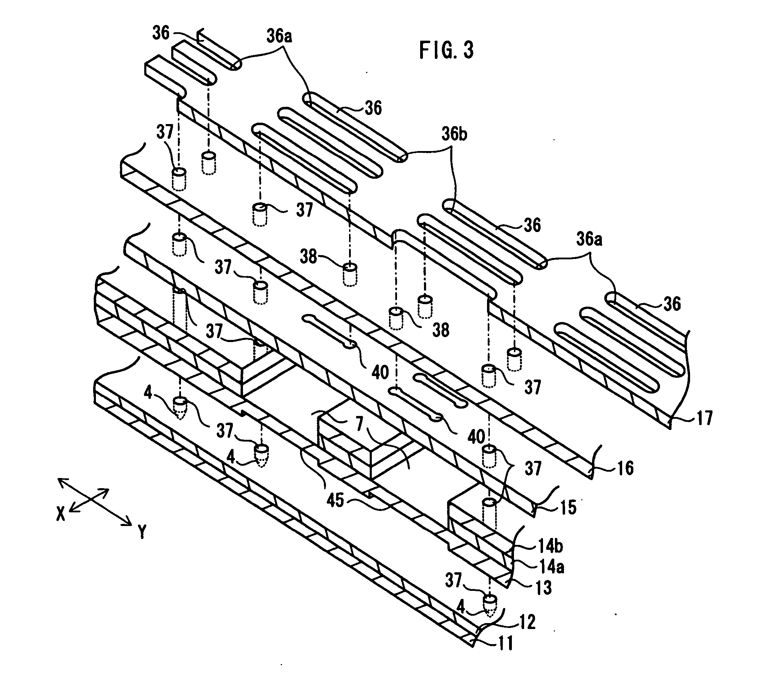

As shown in FIG. 3, in the cavity plate 17, a plurality of pressure chambers 36 are arranged in five lines in parallel to the long side (the X direction) of the cavity plate 17. Each of the pressure chambers 36 is made in an elongated shape in plan view and is perforated such that its longitudinal direction follows the short side direction (Y direction) of the cavity plate 17. One end part 36a thereof in the longitudinal direction is in communication with a nozzle 4, whereas the other end part 36b is in communication with a common ink chamber 7 as described later.

The end parts 36a of the respective pressure chambers 36 are in communication with the corresponding nozzles 4 in the nozzle plate 11, respectively, through communicating holes 37 each having a micro size. The communicating holes 37 are provided by perforating the supply plate 15, the base plate 16, the two manifold plates 14a and 14b, the damper plate 13, and the spacer plate 12.

Through-holes 38 connected to the other end parts 36b of the respective pressure chambers 36 are provided by perforating the base plate 16 adjacent to the bottom surface of the cavity plate 17.

Connection passages 40 for supplying inks into the respective pressure chambers 36 from the common ink chambers 7 as described later are provided in the supply plate 15 adjacent to the bottom surface of the base plate 16.

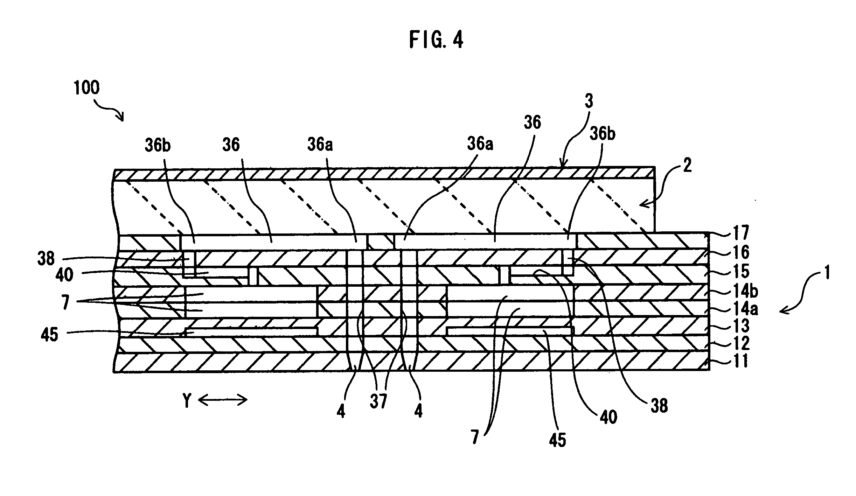

Five long common ink chambers 7 are formed in the two manifold plates 14a and 14b along the long side direction (X direction) thereof so as to extend along each line of the nozzles 4 while passing through the plate thickness. That is, as shown in FIGS. 2 and 4, the two manifold plates 14a and 14b are stacked together. The upper surface of the stack is covered by the supply plate 15. On the other hand, the bottom surface thereof is covered by the damper plate 13. Thus five common ink chambers (manifold chambers) 7 in total are formed in a sealed state. In plan view from the stack direction of the respective plates, each of the common chambers 7 extends in a long shape along the line direction of the pressure chambers 36 (line direction of the nozzles 4) while overlapping with a part of each pressure chamber 36.

As shown in FIGS. 3 and 4, damper chambers 45 isolated from the common ink chambers 7 are formed in a recessed state on the bottom surface side of the damper plate 13 adjacent to the bottom surface of the manifold plate 14a. As shown in FIG. 2, the positions and shapes of the damper chambers 45 are coincident with those of the common ink chambers 7, respectively. This damper plate 13 is formed of a metallic raw material capable of being suitably elastically deformed. Accordingly, the thin plate-like ceiling part above each damper chamber 45 can freely vibrate toward both the common ink chamber 7 side and the damper chamber 45 side. Even when a pressure fluctuation generated in a pressure chamber 36 propagates into a common ink chamber 7 at the time of ink discharge, the ceiling part is deformed elastically and is vibrated. Accordingly, a damper effect is provided that allows the pressure fluctuation to be absorbed and damped. This is intended to reduce so-called crosstalk wherein the pressure fluctuation propagates into the other pressure chambers 36.

As shown in FIG. 2, in an end part of one of the short sides of each of the cavity plate 17, the base plate 16, and the supply plate 15, four ink supply openings 47 are provided by perforating each of the plates, with their positions in the respective plates corresponding to one another. An ink supplied from an ink supply source is in communication with one end part of a common ink chamber 7 through one of these ink supply openings 47. The four ink supply openings 47 are designated as 47a, 47b, 47c and 47d sequentially from the left hand side of FIG. 2.

Inks are supplied into the common ink chambers 7 that serve as ink supply channels, from the ink supply openings 47. Thereafter, as shown in FIG. 3, the inks are distributed and supplied into the respective pressure chambers 36 through the connection passages 40 of the supply plate 15 and the through-holes 38 of the base plate 16. Then the inks pass through the communicating holes 37 from the respective pressure chambers 36 and reach the nozzles 4 corresponding to the respective pressure chambers 36 upon driving of the piezoelectric actuator 2 as described later. When a discharge pressure is applied to the pressure chambers 36 upon driving of the piezoelectric actuator 2 as described later, pressure waves propagate from the pressure chambers 36 to the nozzles 4 through the communicating holes 37, whereby inks are discharged.

In this embodiment, as shown in FIG. 2, the four ink supply openings 47 are provided, whereas the five common ink chambers 7 are provided. Only the ink supply opening 47a is connected to two common ink chambers 7, 7. It is set up that a black ink is supplied into the ink supply opening 47a, in consideration of a higher frequency of use of a black ink as compared with those of the other color inks. Respective yellow, magenta, and cyan inks are supplied individually into the other supply openings 47b, 47c, and 47d, respectively. A filter body 20 having filtration parts 20a corresponding to the respective openings is attached to the ink supply openings 47a, 47b, 47c and 47d, using an adhesive, for example.

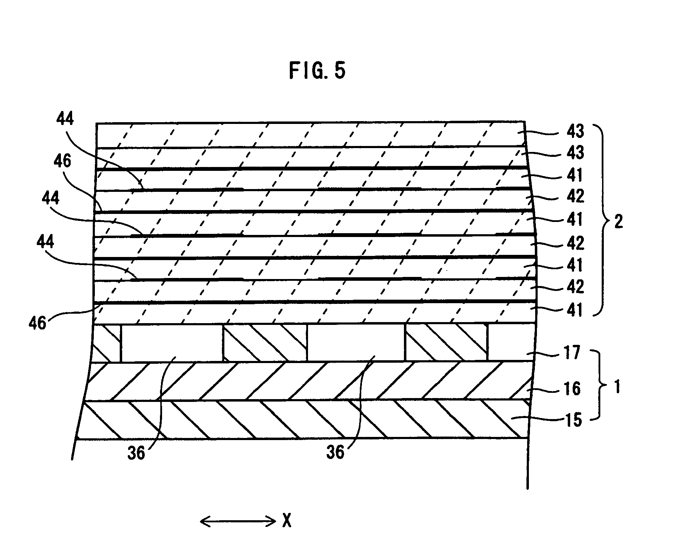

On the other hand, as shown in FIG. 5, the piezoelectric actuator 2 has the following configuration. That is, a plurality of piezoelectric sheets 41 to 43 each having a thickness of 30 µm are stacked together as in the case of a known configuration disclosed in, for example, JP-A-4-341853. Among the respective piezoelectric sheets, on the upper surfaces (wide width surfaces) of a predetermined number of even-numbered piezoelectric sheets 42 when counted from the bottom, individual electrodes 44 each having a narrow width are formed in a line state in every place corresponding to each of the pressure chambers 36 in the cavity unit 1, along the long side direction (X direction). On the upper surfaces (wide width surfaces) of a predetermined number of odd-numbered piezoelectric sheets 41 when counted from the bottom, common electrodes 46 are formed that are common to the plural pressure chambers 36. The upper surface of the uppermost sheet is provided with surface electrodes 48 electrically connected to the respective individual electrodes 44 corresponding to each other in the stack direction and surface electrodes electrically connected to the common electrodes 46.

As is known in the art, when a high voltage is applied between an individual electrode 44 and a common electrode 46, a portion of the piezoelectric sheet positioned between the both electrodes is polarized and serves as an active part.

An adhesive sheet (not shown) made of an ink-impermeable synthetic resin that serves as an adhesive is stuck in advance over the entirety of the bottom surface (wide width surface opposed to the pressure chamber 36) in the aforementioned plate-type piezoelectric actuator 2. The piezoelectric actuator 2 is then adhered and fixed to the cavity unit 1, with the individual electrodes 44 being disposed so as to be opposed to the pressure chambers 36 in the cavity unit 1, respectively. The flexible flat cable 3 is superposed on and pressed against the upper surface of the piezoelectric actuator 2. Thus various wiring patterns (not shown) in the flexible flat cable 3 are electrically connected to the respective surface electrodes.

As described above, the ink-jet head includes the ink chambers (common ink chambers 7), the pressure chambers 36, the nozzles 4, and the piezoelectric actuator 2. The pressure chambers 36 are in communication with the ink chambers through the connection passages 40. The nozzles 4 are in communication with the pressure chambers 36 and are used for ejecting inks. The piezoelectric actuator 2 is used for applying a discharge pressure to inks in the pressure chambers 36. The ink-jet head has the ink passages configured between the ends of the pressure chambers 36 and the tips of the nozzles 4.

An embodiment of an ink-jet recording apparatus will be described below with reference to an accompanying drawing.

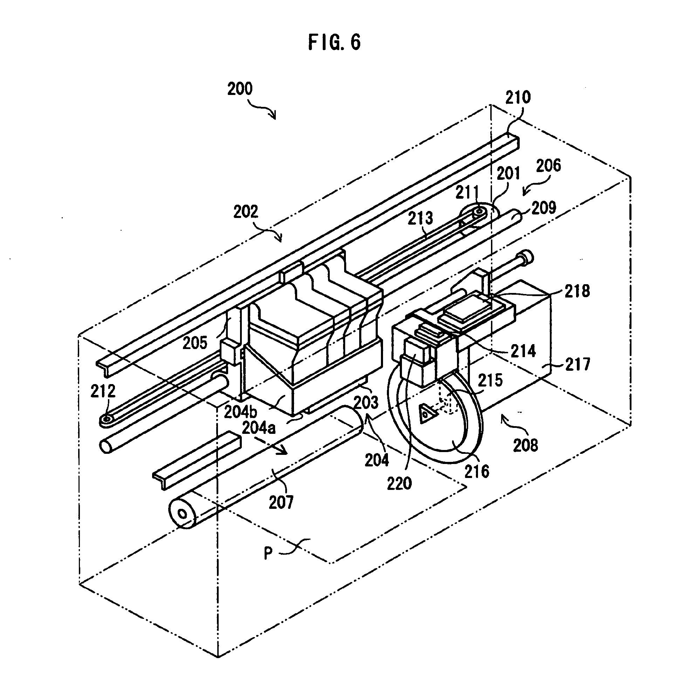

A schematic perspective view of the configuration of an ink-jet recording apparatus body according to the invention is shown in FIG. 6.

This ink-jet recording apparatus 200 includes ink cartridges 202, a head unit 204, a carriage 205, a drive unit 206, a platen roller 207, and a purge unit 208. The ink cartridges 202 are filled with four color inks, namely, cyan, magenta, yellow, and black inks, respectively. The head unit 204 is provided with an ink-jet head 203 for performing printing on a recording medium P such as recording paper. The ink cartridges 202 and the head unit 204 are mounted on the carriage 205. The drive unit 206 reciprocates the carriage 205 in a straight line direction. The platen roller 207 extends in a reciprocating direction of the carriage 205 and is disposed so as to be opposed to the ink-jet head 203.

The four ink cartridges 202 filled with the cyan ink, the magenta ink, the yellow ink, and the black ink, respectively, are attached onto a placing portion 204a of the head unit 204 between a pair of side covers 204b formed at both sides of the placing portion 204a.

The drive unit 206 includes a carriage shaft 209, a guide plate 210, two pulleys 211 and 212, and an endless belt 213. The carriage shaft 209 is disposed at a lower end portion of the carriage 205 and extends in parallel with the platen roller 207. The guide plate 210 is disposed at an upper end portion of the carriage 205 and extends in parallel with the carriage shaft 209. The two pulleys 211 and 212 are disposed in positions corresponding to both end portions of the carriage shaft 209 and between the carriage shaft 209 and the guide plate 210. The endless belt 213 is stretched between the pulleys 211 and 212.

As one 211 of the pulleys is rotated in normal and reverse directions by driving a carriage motor 201, the carriage 205 that is connected to the endless belt 213 is reciprocated linearly, along the carriage shaft 209 and the guide plate 210, in accordance with the normal and reverse rotation of the pulley 211.

The recording medium P is fed from a sheet feeding cassette (not shown) provided on a side of or under the ink-jet recording apparatus 200. Then the recording medium P is brought between the ink-jet head 203 and the platen roller 207. Thereafter, it is subjected to predetermined printing by the ink discharged from the ink-jet head 203. After that, the recording medium P is discharged to the outside. Mechanisms of feeding and discharging the recording medium P are omitted in FIG. 6.

The purge unit 208 is provided on a side of the platen roller 207. The purge unit 208 is disposed so as to be opposed to the ink-jet head 203 when the head unit 204 is placed in a reset position. The purge unit 208 includes a purge cap 214, a pump 215, a cam 216, and an ink reservoir 217. The purge cap 214 comes into contact with opening portions of nozzles so as to cover a plurality of nozzles (not shown) formed in the ink-jet head 203. When the head unit 204 is placed in the reset position, the nozzles in the ink-jet head 203 are covered with the purge cap 214 and defect ink containing, for example, air bubbles trapped inside the ink-jet head 203 is sucked by the pump 215 driven by the cam 216. Thereby the ink-jet head 203 is intended to be restored. The sucked defect ink is stored in the ink reservoir 217.

A wiper member 220 is provided in a position on the platen roller 207 side of the purge unit 208 while being adjacent to the purge unit 208. The wiper member 220 is formed in the shape of a spatula and wipes the nozzle-formed surface of the ink-jet head 203 or as the carriage 205 moves. In order to prevent the ink from drying, the cap 218 is provided to cover a plurality of nozzles of the ink-jet head 203 that returns to the reset position after completion of printing.

### EXAMPLES

Next, examples of the present invention are described together with comparative examples. However, the present invention is not limited by the following examples and comparative examples.

### Example 1

Ink composition components (Table 1) were stirred well to be mixed together. Thereafter, the mixture was filtrated with a 0.8-µm membrane filter and thereby a filtrate was obtained. The filtrate was used as an ink for ink-jet recording of this example. The ink had a pH of 7.0. The viscosity of the ink was 2.4 mPa•s. In this example, the weight ratio (A : B) between the polymer (A) and the coloring agent (B) was 0.057:1.

**TABLE 1**

| | |
|---|---|
| C.I. Pigment Blue 15:3 (*1) | 8.75 (3.5) |
| Triethylene glycol butyl ether | 3.0 |
| Polyoxyethylene polyoxypropylene glycol (*2) | 0.2 (0.2) |
| Polymer containing repeating unit represented by formula (1) (*3) | 0.5 (0.2) |
| Glycerin | 23.0 |
| Water | 64.55 |

| | |
|---|---|
| (unit: % by weight) (Numerical values in the parentheses are amounts indicated by % by weight in terms of effective components.) (*1) Hostafin® Blue B2G (concentration of pigment is 40% by weight, product of Clariant International Ltd.). The same applies to the other tables below. (*2) NEWPOL® PE64 (effective component is 100%, product of Sanyo Chemical Industries, Ltd.). (*3) JURYMER® AC-103 (aqueous solution of sodium polyacrylate, effective component is 40% by weight, product of NIHON JYUNYAKU Co., Ltd.). The same applies to the other tables below. | |

### Example 2

Ink composition components (Table 2) were stirred well to be mixed together. Thereafter, the mixture was filtrated with a 0.8-µm membrane filter and thereby a filtrate was obtained. The filtrate was used as an ink for ink-jet recording of this example. The ink had a pH of 7.0. The viscosity of the ink was 2.8 mPa•s. In this example, the weight ratio (A : B) between the polymer (A) and the coloring agent (B) was 0.005 : 1.

**TABLE 2**

| | |
|---|---|
| Carbon black (*4) | 26.5 (4.0) |
| Dipropylene glycol n-propyl ether | 0.9 |
| Surfactant represented by formula (5) (*5) | 0.05 (0.05) |
| Polymer containing repeating unit represented by formula (2) (*6) | 0.045 (0.02) |
| 1,2,3-benzotriazol | 0.02 |
| Glycerin | 26.0 |
| Water | 46.485 |

| | |
|---|---|
| (unit: % by weight) (Numerical values in the parentheses are amounts indicated by % by weight in terms of effective components.) (*4) CAB-O-JET® 300 (concentration of pigments is 15% by weight, product of Cabot Corporation). The same applies to the other tables below. (*5) OLFIN ® E1010 (effective component is 100%, product of Nissin Chemical Industry Co., Ltd.). The same applies to the other tables below. (*6) SHALLOL® AH-103P (aqueous solution of ammonium polyacrylate (Mw=10000), effective component is 44% by weight, product of DAI-ICHI KOGYO SEIYAKU Co., Ltd.). The same applies to the other tables below. | |

### Example 3

Ink composition components (Table 3) were stirred well to be mixed together. Thereafter, the mixture was filtrated with a 0.8-µm membrane filter and thereby a filtrate was obtained. The filtrate was used as an ink for ink-jet recording of this example. The ink had a pH of 7.0. The viscosity of the ink was 2.6 mPa•s. In this example, the weight ratio (A: B) between the polymer (A) and the coloring agent (B) was 0.333 : 1.

**TABLE 3**

| | |
|---|---|
| Carbon black (*4) | 10.0 (1.5) |
| Dipropylene glycol n-propyl ether | 0.9 |
| Surfactant represented by formula (5) (*5) | 0.1 (0.1) |
| Surfactant represented by formula (6) (*7) | 0.2 (0.056) |
| Polymer containing repeating unit represented by formula (2) (*6) | 1.14 (0.5) |
| Mixture of 4-nitrobenzotriazole and 5-nitrobenzotriazole (*8) | 0.2 |
| Glycerin | 24.0 |
| Water | 63.46 |

| | |
|---|---|
| (unit: % by weight) (Numerical values in the parentheses are amounts indicated by % by weight in terms of effective components.) (*7) SUNNOL® NL-1430 (effective component is 28% by weight, product of Lion Corporation). The same applies to the other tables below. (*8) VERZONE N-BTA (effective component is 100% by weight, product of Daiwa Fine Chemicals Co., Ltd.). The same applies to the other tables below. | |

### Example 4

Ink composition components (Table 4) were stirred well to be mixed together. Thereafter, the mixture was filtrated with a 0.8-µm membrane filter and thereby a filtrate was obtained. The filtrate was used as an ink for ink-jet recording of this example. The ink had a pH of 8.0. The viscosity of the ink was 2.6 mPa•s. In this example, the weight ratio (A : B) between the polymer (A) and the coloring agent (B) was 0.051 : 1.

**TABLE 4**

| | |
|---|---|
| Carbon black (*9) | 26.0 (3.9) |
| Dipropylene glycol n-propyl ether | 0.4 |
| Surfactant represented by formula (5) (*10) | 0.02 (0.02) |
| Surfactant represented by formula (6) (*7) | 0.02 (0.0056) |
| Polymer containing repeating unit represented by formula (1) (*3) | 0.5 (0.2) |
| 1,2,3-benzotriazol | 0.5 |
| Triethanolamine | 0.1 |
| Glycerin | 24.0 |
| Water | 48.46 |

| | |
|---|---|
| (unit: % by weight) (Numerical values in the parentheses are amounts indicated by % by weight in terms of effective components.) (*9) CAB-O-JET® 200 (concentration of pigments is 15% by weight, product of Cabot Corporation). The same applies to the other tables below. (*10) OLFIN® E1004 (effective component is 100%, product of Nissin Chemical Industry Co., Ltd.). The same applies to the other tables below. | |

### Example 5

Ink composition components (Table 5) were stirred well to be mixed together. Thereafter, the mixture was filtrated with a 0.8-µm membrane filter and thereby a filtrate was obtained. The filtrate was used as an ink for ink-jet recording of this example. The ink had a pH of 8.0. The viscosity of the ink was 2.5 mPa•s. In this example, the weight ratio (A : B) between the polymer (A) and the coloring agent (B) was 0.051 : 1.

**TABLE 5**

| | |
|---|---|
| Carbon black (*9) | 26.0 (3.9) |
| Dipropylene glycol n-propyl ether | 0.5 |
| Surfactant represented by formula (5) (*10) | 0.02 (0.2) |
| Polymer containing repeating unit represented by formula (1) (*3) | 0.5 (0.2) |
| Triethanolamine | 0.1 |
| Glycerin | 23.0 |
| Water | 49.88 |

| | |
|---|---|
| (unit: % by weight) (Numerical values in the parentheses are amounts indicated by % by weight in terms of effective components.) | |

### Example 6

Ink composition components (Table 6) were stirred well to be mixed together. Thereafter, the mixture was filtrated with a 0.8-µm membrane filter and thereby a filtrate was obtained. The filtrate was used as an ink for ink-jet recording of this example. The ink had a pH of 8.0. The viscosity of the ink was 2.7 mPa•s. In this example, the weight ratio (A : B) between the polymer (A) and the coloring agent (B) was 0.05 : 1.

**TABLE 6**

| | |
|---|---|
| Carbon black (*4) | 26.5 (4.0) |
| Dipropylene glycol n-propyl ether | 1.8 |
| Surfactant represented by formula (5) (*5) | 0.2 (0.2) |
| Polymer containing repeating unit represented by formula (2) (*6) | 0.45 (0.2) |
| Triethanolamine | 0.1 |
| Glycerin | 25.0 |
| Water | 45.95 |

| | |
|---|---|
| (unit: % by weight) (Numerical values in the parentheses are amounts indicated by % by weight in terms of effective components.) | |

### Example 7

Ink composition components (Table 7) were stirred well to be mixed together. Thereafter, the mixture was filtrated with a 0.8-µm membrane filter and thereby a filtrate was obtained. The filtrate was used as an ink for ink-jet recording of this example. The ink had a pH of 9.0. The viscosity of the ink was 2.6 mPa•s. In this example, the weight ratio (A : B) between the polymer (A) and the coloring agent (B) was 0.067 : 1.

**TABLE 7**

| | |
|---|---|
| Carbon black (*4) | 20.0 (3.0) |
| Dipropylene glycol n-propyl ether | 2.5 |
| Surfactant represented by formula (5) (*5) | 0.2 (0.2) |
| Surfactant represented by formula (6) (*7) | 0.5 (0.14) |
| Polymer containing repeating unit represented by formula (2) (*6) | 0.45 (0.2) |
| 1,2,3-benzotriazol | 0.1 |
| Triethanolamine | 0.2 |
| Glycerin | 24.0 |
| Water | 52.05 |

| | |
|---|---|
| (unit: % by weight) (Numerical values in the parentheses are amounts indicated by % by weight in terms of effective components.) | |

### Comparative Example 1

Ink composition components (Table 10) were stirred well to be mixed together. Thereafter, the mixture was filtrated with a 0.8-µm membrane filter and thereby a filtrate was obtained. The filtrate was used as an ink for ink-jet recording of this comparative example. The ink had a pH of 8.0. The viscosity of the ink was 2.6 mPa•s.

**TABLE 10**

| | |
|---|---|
| C.I. Pigment Blue 15:3 (*1) | 10.0 (4.0) |
| Triethanolamine | 0.1 |
| Glycerin | 24.0 |
| Water | 65.9 |

| | |
|---|---|
| (unit: % by weight) (Numerical values in the parentheses are amounts indicated by % by weight in terms of effective components.) | |

### Comparative Example 2

Ink composition components (Table 11) were stirred well to be mixed together. Thereafter, the mixture was filtrated with a 0.8-µm membrane filter and thereby a filtrate was obtained. The filtrate was used as an ink for ink-jet recording of this comparative example. The ink had a pH of 8.0. The viscosity of the ink was 2.4 mPa•s.

**TABLE 11**

| | |
|---|---|
| Carbon black (*4) | 26.0 (3.9) |
| Dipropylene glycol n-propyl ether | 1.5 |
| Surfactant represented by formula (5) (*10) | 0.1 (0.1) |
| Surfactant represented by formula (6) (*7) | 0.4 (0.112) |
| Triethanolamine | 0.1 |
| Glycerin | 22.0 |
| Water | 49.9 |

| | |
|---|---|
| (unit: % by weight) (Numerical values in the parentheses are amounts indicated by % by weight in terms of effective components.) | |

### Comparative Example 3

Ink composition components (Table 12) were stirred well to be mixed together. Thereafter, the mixture was filtrated with a 0.8-µm membrane filter and thereby a filtrate was obtained. The filtrate was used as an ink for ink-jet recording of this comparative example. The ink had a pH of 3.0. The viscosity of the ink was 2.6 mPa•s.

**TABLE 12**

| | |
|---|---|
| Carbon black (*9) | 26.0 (3.9) |
| Dipropylene glycol n-propyl ether | 1.8 |
| Surfactant represented by formula (5) (*5) | 0.2 (0.2) |
| Surfactant represented by formula (6) (*7) | 0.5 (0.14) |
| Polyacrilic acid (*14) | 1.1(0.5) |
| Triethanolamine | 0.1 |
| Glycerin | 24.0 |
| Water | 46.3 |

| | |
|---|---|
| (unit: % by weight) (Numerical values in the parentheses are amounts indicated by % by weight in terms of effective components.) (*14) AQUALIC® HL-415 (aqueous solution of polyacrylic acid (Mw=10000), effective component is 45% by weight, product of NIPPON SHOKUBAI Co., Ltd.). | |

### Comparative Example 4

Ink composition components (Table 13) were stirred well to be mixed together. Thereafter, the mixture was filtrated with a 0.8-µm membrane filter and thereby a filtrate was obtained. The filtrate was used as an ink for ink-jet recording of this comparative example. The ink had a pH of 7.0. The viscosity of the ink was 2.5 mPa•s.

**TABLE 13**

| | |
|---|---|
| Carbon black (*4) | 10.0 (1.5) |
| Dipropylene glycol n-propyl ether | 0.9 |
| Surfactant represented by formula (5) (*5) | 0.1 (0.1) |
| Surfactant represented by formula (6) (*7) | 0.2 (0.056) |
| Mixture of 4-nitrobenzotriazole and 5-nitrobenzotriazole (*8) | 0.2 |
| Glycerin | 24.0 |
| Water | 64.6 |

| | |
|---|---|
| (unit: % by weight) (Numerical values in the parentheses are amounts indicated by % by weight in terms of effective components.) | |

### Evaluation

The inks for ink-jet recording of the respective examples described above and the inks for ink-jet recording of the respective comparative examples described above were evaluated with respect to the following items (a) to (g). Specific methods of evaluation with respect to the following items (a) to (g) are described below. The evaluation results are indicated in Tables 14 and 15 below.
(a) Nickel and 42 alloy immersion evaluation
(b) Rubber deposition evaluation
(c) Ejection stability evaluation
(d) Endurance ejection stability evaluation
(e) Linewidth evaluation
(f) Raggedness evaluation
(g) Evaluation of drying property on paper

In the evaluation tests with respect to the aforementioned items (c) ejection stability evaluation, (d) endurance ejection stability evaluation, (e) linewidth evaluation, (f) raggedness evaluation, and (g) evaluation of drying property on paper, printing was carried out using an ink-jet printer-mounted digital multi-function center (produced by Brother Kogyo Kabushiki Kaisha; Trade Name: DCP-110C). An ink cartridge filled with an ink for ink-jet recording was loaded into the multi-function center. In the multi-function center, printing paper produced by M-real (Data Copy (basis weight: 65 to 100 g/cm², paper thickness: 80 to 110 µm, degree of whiteness: at least 80%, and opacity: at least 75%)) was used.

### (a) Nickel and 42 alloy immersion evaluation

10 mL of each ink for ink-jet recording was put into an airtight container. Nickel or 42 alloy samples were prepared that had been processed to have a size of 50 mm length × 10 mm width × 1 mm thickness. One of the samples was immersed in the ink in the container and was allowed to stand in a 60°C thermostatic chamber for two weeks. Thereafter, the sample was taken out of the ink. The sample taken out therefrom was observed visually. The results of the visual observation were evaluated in accordance with the following criteria.

### Immersion evaluation criteria

+ +: Nickel or 42 alloy is neither colored nor corroded.
+ : Nickel or 42 alloy is colored but is not corroded.
-- : Nickel or 42 alloy is colored and corroded.

### (b) Rubber deposition evaluation

10 mL of each ink for ink-jet recording was put into an airtight container. Rubber samples were prepared that had been processed to have a size of 50 mm length × 10 mm width × 1 mm thickness. One of the rubber samples was immersed in the ink in the container and was allowed to stand in a 60°C thermostatic chamber for two weeks. Thereafter, the sample was taken out of the ink. The remaining ink in the container was filtrated with an electroformed filter (with a pore diameter of 13 µm and an effective filtration area of 8 cm²) and thereby the time (X) required for the filtration was measured. For a control, no rubber sample was used. In the control, the ink for ink-jet recording alone was allowed to stand under the same conditions (60°C, two weeks). With respect to the control, the ink in the container was filtrated with the electroformed filter and thereby the time required for the filtration was measured. The time required for the filtration of the control was taken as a reference time (Y). Then the ratio [(Z = (X / Y) × 100(%)] of the time required for the filtration of the ink in which the rubber sample had been immersed, to the reference time was determined. The ratio Z was evaluated in accordance with the following criteria. The electroformed filter that had been used for the filtration was observed with a microscope. As a result of the observation, the amount of deposit increased with an increase in the ratio Z.

### Rubber deposition evaluation criteria

+ +: Required a filtration time of less than 130% of the reference time.
+ : Required a filtration time of at least 130% but less than 200% of the reference time.
- : Required a filtration time of at least 200% but less than 400% of the reference time.
- -: Required a filtration time of at least 400% of the reference time.

### (c) Ejection stability evaluation

Continuous printing of 100 million dots (approximately 30,000 sheets) was carried out. The result of the continuous printing was evaluated in accordance with the following criteria. The term "undischarge" described below denotes the state where the nozzle of the ink-jet head is clogged and the ink is not discharged. The term "discharge deflection" described below denotes the state where the nozzle of the ink-jet head is partially clogged and thereby the ink is discharged not perpendicularly to the printing paper but obliquely thereto.

### Ejection stability evaluation criteria

+ +: Neither undischarge nor discharge deflection occurred during the continuous printing.
+ : Slight undischarge and/or discharge deflection occurred during the continuous printing but the undischarge and/or discharge deflection was restored by five purges or fewer.
- -: Undischarge and discharge deflection occurred many times during the continuous printing and the undischarge and discharge deflection were not restored by five purges.

### (d) Endurance ejection stability evaluation

After the aforementioned ejection stability evaluation test, the ink-jet printer-mounted digital multi-function center with the ink cartridge being mounted was allowed to stand in a 60°C thermostatic chamber for two weeks. Thereafter, continuous printing of 100 million dots (approximately 30,000 sheets) was carried out. The result of the continuous printing was evaluated in accordance with the following criteria.

### Endurance ejection stability evaluation criteria

++: Neither undischarge nor discharge deflection occurred during the continuous printing.
+ : Slight undischarge and/or discharge deflection occurred during the continuous printing but the undischarge and/or discharge deflection was restored by five purges or fewer.
- -: Undischarge and discharge deflection occurred many times during the continuous printing and the undischarge and discharge deflection were not restored by five purges.

### (e) Linewidth evaluation

One dot line was printed at a resolution of 600 × 600 dpi. The printed linewidth was measured using an IAS measuring instrument produced by QEA. The result of the measurement was evaluated in accordance with the following criteria.

### Linewidth evaluation criteria

+ +: One dot linewidth is between 60 µm and 100 µm.
+ : One dot linewidth is more than 100 µm but not more than 120 µm.
-- : One dot line width is less than 60 µm or more than 120 µm.

### (f) Raggedness evaluation

One dot line was printed at a resolution of 600 × 600 dpi. The Rag with respect to the printed lines was measured using the IAS measuring instrument produced by QEA. The result of the measurement was evaluated in accordance with the following criteria. The Rag is a line raggedness defined by ISO13660. The ragged line is a wavy line that is not smooth with respect to a smooth ideal line edge.

### Raggedness evaluation criteria

+ +: Rag of 1 dot line is 10 or less.
+ : Rag of 1 dot line is more than 10 but not more than 20.
- -: Rag of 1 dot line is more than 20.

### (g) Evaluation of drying property on paper

Printing was carried out throughout a region of 1 cm length × 2 cm width of the printing paper at a resolution of 600 × 600 dpi. After printing, the printing paper was fixed onto a horizontal stage, with the printed surface facing upward. Then a tension gauge (produced by Ooba Seiki Seisakusho Co., Ltd., Trade Name: Oogigata tension gauge (fan type tension gauge)) was placed perpendicularly to the printed surface. The tip of the tension gauge was placed on a part of the printed region of the printing paper and the part of the printed region was rubbed in the lengthwise direction at a force of 50N. Five seconds later, the tip of the tension gauge was placed on another part of the printed region and the aforementioned another part of the printed region was rubbed in the lengthwise direction at a force of 50N. This operation was repeated until the ink in the printed region was no longer rubbed by the tension gauge. The time required to obtain the state where the ink in the printed region was no longer rubbed was measured. This time was considered as the drying time. The drying time was evaluated in accordance with the following criteria.

### Criteria for evaluation of drying property on paper

++: The drying time in the printed region is 30 seconds or shorter.
+ : The drying time in the printed region is longer than 30 seconds but not longer than 60 seconds.
- -: The drying time in the printed region is longer than 60 seconds.

**TABLE 14**

| | | Example | | | | | | |
|---|---|---|---|---|---|---|---|---|
| | | 1 | 2 | 3 | 4 | 5 | 6 | 7 |
| Surfactant(*15) | | + | + | + | + | + | + | + |
| A:B | | 0.057 | 0.005 | 0.333 | 0.051 | 0.051 | 0.05 | 0.067 |
| pH | | 7.0 | 7.0 | 7.0 | 8.0 | 8.0 | 8.0 | 9.0 |
| Viscosity of ink (mPa•s) | | 2.4 | 2.8 | 2.6 | 2.6 | 2.5 | 2.7 | 2.6 |
| Immersion | Nickel | + | + | ++ | ++ | + | + | + |
| | 42Alloy | ++ | + | ++ | ++ | ++ | ++ | ++ |
| Rubber deposition | | + | + | + | ++ | ++ | ++ | + |
| Ejection stability | | + | + | ++ | + | + | + | ++ |
| Endurance ejection stability | | + | + | ++ | + | + | + | + |
| Linewidth | | ++ | ++ | ++ | + | + | + | + |
| Raggedness | | + | + | + | ++ | + | + | + |
| Drying property on paper | | + | ++ | ++ | + | + | ++ | ++ |

| | | | | | | | | |
|---|---|---|---|---|---|---|---|---|
| (*15) +: The ink contains a surfactant. - : The ink doesn't contain a surfactant. The same applies to the other tables below. | | | | | | | | |

**TABLE 15**

| | | Comparative Example | | | |
|---|---|---|---|---|---|
| | | 1 | 2 | 3 | 4 |
| Surfactant(*15) | | - | + | + | + |
| A:B(*16) | | - | - | 0.128 | - |
| pH | | 8.0 | 8.0 | 3.0 | 7.0 |
| Viscosity of ink (mPa • s) | | 2.6 | 2.4 | 2.6 | 2.5 |
| Immersion | Nickel | -- | -- | -- | -- |
| | 42Alloy | -- | -- | -- | -- |
| Rubber deposition | | ++ | ++ | -- | + |
| Ejection stability | | -- | ++ | -- | + |
| Endurance ejection stability | | -- | -- | -- | -- |
| Linewidth | | -- | + | + | ++ |
| Raggedness | | ++ | + | + | + |
| Drying property on paper | | -- | + | ++ | ++ |

| | | | | | |
|---|---|---|---|---|---|
| (*16) In Comparative Example 3, A:B is Polyacrilic acid:Color agent. | | | | | |

The ink of Example 1 contains a polymer containing the repeating unit represented by the formula (1). Nickel and 42 alloy were immersed in the ink of Example 1 but the metals were not corroded. The result of the linewidth evaluation of the ink according to Example 1 was very good.

The ink of Example 2 contains a polymer containing the repeating unit represented by the formula (2). Nickel and 42 alloy were immersed in the ink of Example 2 but the metals were not corroded. The result of the linewidth evaluation of the ink according to Example 2 was very good. The result of the evaluation of drying property on paper of the ink according to Example 2 also was very good.

The ink of Example 3 contains a polymer containing the repeating unit represented by the formula (2). Nickel and 42 alloy were immersed in the ink of Example 3 but the metals were not corroded. The result of the ejection stability evaluation of the ink according to Example 3 was very good. Similarly, the result of the endurance ejection stability evaluation of the ink according to Example 3 was very good. The result of the linewidth evaluation of the ink according to Example 3 also was very good. Furthermore, the result of the evaluation of drying property on paper of the ink according to Example 3 was very good.

The ink of Example 4 and the ink of Example 5 each contain a polymer containing the repeating unit represented by the formula (1). Nickel and 42 alloy were immersed in the ink of Example 4. Similarly, nickel and 42 alloy were immersed in the ink of Example 5. However, the metals were not corroded in both the cases. The results of the rubber deposition evaluation of the ink according to Example 4 and the ink according to Example 5 were very good. In addition, the result of the raggedness evaluation of the ink according to Example 4 also was very good.

The ink of Example 6 and the ink of Example 7 each contain a polymer containing the repeating unit represented by the formula (2). Nickel and 42 alloy were immersed in the ink of Example 6. Similarly, nickel and 42 alloy were immersed in the ink of Example 7. However, the metals were not corroded in both the cases. The result of the rubber deposition evaluation of the ink according to Example 6 was very good. In addition, the results of the evaluation of drying property on paper of the ink according to Example 6 and the ink according to Example 7 were very good. The result of the ejection stability evaluation of the ink according to Example 7 was very good.

The ink of Comparative Example 1 does not contain the polymers. Nickel and 42 alloy were immersed in the ink of Comparative Example 1 and as a result, the metals were corroded. Furthermore, the result of the ejection stability evaluation of the ink according to Comparative Example 1 was poor. The result of the endurance ejection stability evaluation of the ink according to Comparative Example 1 also was poor. Similarly, the result of the linewidth evaluation of the ink according to Comparative Example 1 was poor. Furthermore, in the case of using the ink of Comparative Example 1, banding occurred in printing of a solid part. The result of the evaluation of drying property on paper of the ink according to Comparative Example 1 also was poor.

The ink of Comparative Example 2 does not contain the polymers. Nickel and 42 alloy were immersed in the ink of Comparative Example 2 and as a result, the metals were corroded. The result of the endurance ejection stability evaluation of the ink according to Comparative Example 2 was poor.

The ink of Comparative Example 3 contains polyacrylic acid. Nickel and 42 alloy were immersed in the ink of Comparative Example 3 and as a result, the metals were corroded. The ink of Comparative Example 3 had a pH of 3.0. Accordingly, the result of the rubber deposition evaluation of the ink according to Comparative Example 3 was poor. Furthermore, the result of the ejection stability evaluation of the ink according to Comparative Example 3 was poor. The result of the endurance ejection stability evaluation of the ink according to Comparative Example 3 also was poor.

The ink of Comparative Example 4 does not contain the polymers. The ink of Comparative Example 4 contains a benzotriazole derivative (an anticorrosive). Nickel and 42 alloy were immersed in the ink of Comparative Example 4 and as a result, the metals were corroded. From this result, it can be said that nickel and 42 alloy cannot be prevented from corroding by the benzotriazole derivative (an anticorrosive) alone.

## Claims

1. A method of delaying the occurrence of corrosion and/or reducing the amount of corrosion of an ink-jet head provided with an ink flow passage formed of nickel-containing metal in an ink-jet recording apparatus, said method comprising ejecting an ink from the ink-jet head, wherein the ink comprises: water; a coloring agent; and a polymer which comprises at least one of an alkali metal salt of a polyacrylic acid and an ammonium salt of a polyacrylic acid.

2. A method according to claim 1, wherein the alkali metal salt of the polyacrylic acid comprises a repeating unit represented by formula (1): 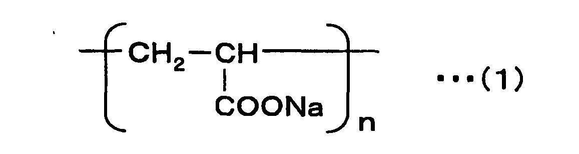 where n denotes a positive integer, or
wherein the ammonium salt of the polyacrylic acid comprises a repeating unit represented by formula (2): 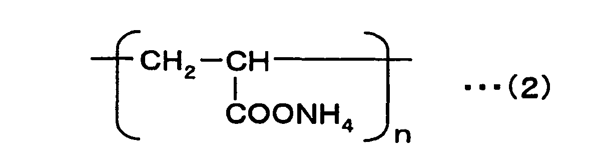 where n denotes a positive integer.

3. A method according to claim 2 wherein n is a number in the range of 20 to 10000.

4. A method according to any preceding claim, wherein the ratio of the polymer to the total amount of the ink is in a range of 0.01 to 1% by weight.

5. A method according to any preceding claim, wherein the ink has a pH in a range of 6 to 9.

6. A method according to any preceding claim, wherein the weight ratio (A : B) between the polymer (A) and the coloring agent (B) is in a range of 0.002 : 1 to 0.5 : 1.

7. A method according to any preceding claim, further comprising a benzotriazole derivative.

8. A method according to any preceding claim, wherein the coloring agent comprises a pigment.

9. A method according to claim 8, wherein the pigment comprises carbon black.

10. A method according to any preceding claim, further comprising a surfactant.

11. A method according to claim 10, wherein the surfactant comprises at least one of an acetylene glycol surfactant represented by formula (5) and a polyoxyethylene alkyl ether anionic surfactant represented by formula (6): 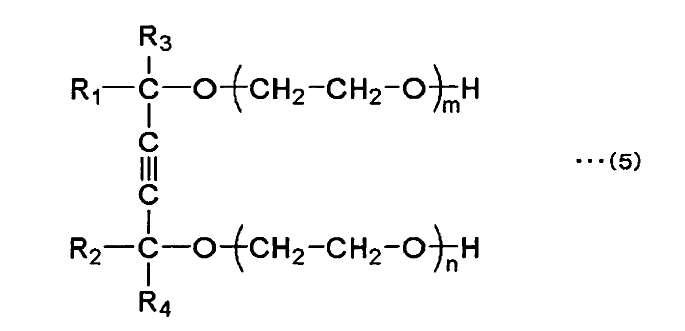 where m and n indicate numbers that satisfy m + n = 0 to 50, R₁, R₂, R₃, and R₄ each denote an alkyl group, the alkyl group has a carbon number in a range of 1 to 5, the alkyl group is a straight-chain alkyl group or a branched-chain alkyl group, and R₁, R₂, R₃, and R₄ are identical to or different from each other, and 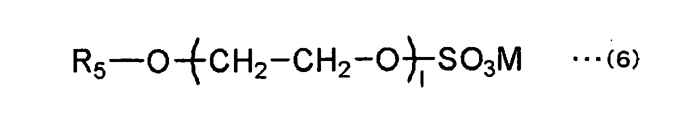 where R₅ denotes an alkyl group, the alkyl group has a carbon number in a range of 12 to 15, the alkyl group is a straight-chain alkyl group or a branched-chain alkyl group, M indicates Na⁺ or [NH(CH₂CH₂OH)₃]⁺, and *l* denotes a number in a range of 2 to 4.

12. A method according to any preceding claim, further comprising a watersoluble organic solvent.

13. A method according to any preceding claim, further comprising a pH adjuster.

14. A method according to any preceding claim, wherein the ink has a viscosity in a range of 2.5 to 2.7 mPa·s.

## Patentansprüche

1. Verfahren zum Verzögern des Auftretens von Korrosion und/oder des Reduzierens des Korrosionsgrads eines Tintenstrahlkopfs, der mit einer Tintenflusspassage, gebildet aus Nickel enthaltendem Metall, ausgestattet ist, in einer Tintenstrahlaufzeichnungsapparatur, wobei das Verfahren Ausstoßen einer Tinte aus dem Tintenstrahlkopf umfasst, wobei die Tinte umfasst: Wasser, ein Färbemittel und ein Polymer, das wenigstens eins von einem Alkalimetallsalz einer Polyacrylsäure und einem Ammoniumsalz einer Polyacrylsäure umfasst.

2. Verfahren gemäß Anspruch 1, wobei das Alkalimetallsalz der Polyacrylsäure eine Repetiereinheit umfasst, die durch Formel (1) dargestellt wird: 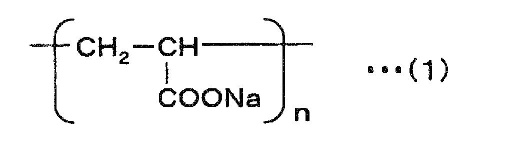 worin n eine positive ganze Zahl angibt, oder
wobei das Ammoniumsalz der Polyacrylsäure eine Repetiereinheit umfasst, die durch Formel (2) dargestellt wird: 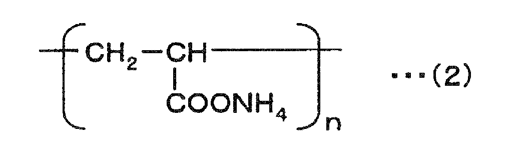 worin n eine positive ganze Zahl angibt.

3. Verfahren gemäß Anspruch 2, wobei n eine Zahl im Bereich von 20 bis 10.000 ist.

4. Verfahren gemäß einem vorangehenden Anspruch, wobei das Verhältnis des Polymers zu der Gesamtmenge der Tinte im Bereich von 0,01 bis 1 Gew.-% ist.

5. Verfahren gemäß einem vorangehenden Anspruch, wobei die Tinte einen pH im Bereich von 6 bis 9 hat.

6. Verfahren gemäß einem vorangehenden Anspruch, wobei das Gewichtsverhältnis (A : B) zwischen dem Polymer (A) und dem Färbemittel (B) im Bereich von 0,002 : 1 bis 0,5 : 1 liegt.

7. Verfahren gemäß einem vorangehenden Anspruch, das außerdem ein Benzotriazolderivat umfasst.

8. Verfahren gemäß einem vorangehenden Anspruch, wobei das Färbemittel ein Pigment umfasst.

9. Verfahren gemäß Anspruch 8, wobei das Pigment Carbon Black umfasst.

10. Verfahren gemäß einem vorangehenden Anspruch, das außerdem ein oberflächenaktives Mittel umfasst.

11. Verfahren gemäß Anspruch 10, wobei das oberflächenaktive Mittel wenigstens eins aus einem oberflächenaktiven Acetylenglycolmittel, dargestellt durch Formel (5), und einem oberflächenaktiven anionischen Polyoxyethylenalkylether-Mittel, dargestellt durch Formel (6) umfasst: 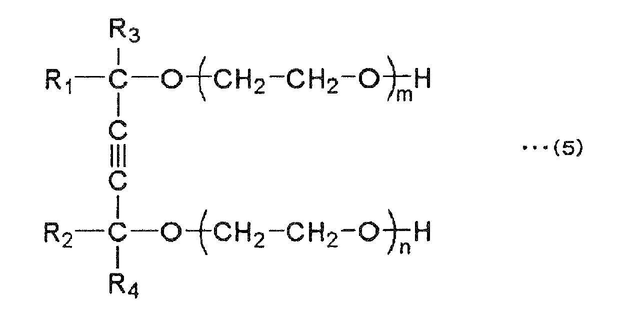 worin m und n Zahlen angeben, die m + n = 0 bis 50 genügen, R₁, R₂, R₃ und R₄ jeweils eine Alkylgruppe bezeichnen, wobei die Alkylgruppe eine Kohlenstoffzahl im Bereich von 1 bis 5 hat, wobei die Alkylgruppe eine geradkettige Alkylgruppe oder eine verzweigtkettige Alkylgruppe ist, und R₁, R₂, R₃ und R₄ gleich oder voneinander verschieden sind, und 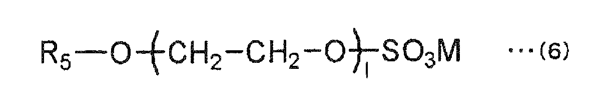 worin R₅ eine Alkylgruppe bezeichnet, wobei die Alkylgruppe eine Kohlenstoffzahl im Bereich von 12 bis 15 hat, die Alkylgruppe eine geradkettige Alkylgruppe oder eine verzweigtkettige Alkylgruppe ist, M Na⁺ oder [NH(CH₂CH₂OH)₃]⁺ angibt und 1 eine Zahl im Bereich von 2 bis 4 angibt.

12. Verfahren gemäß einem vorangehenden Anspruch, das außerdem ein wasserlösliches organisches Lösungsmittel umfasst.

13. Verfahren gemäß einem vorangehenden Anspruch, das außerdem ein pH-Einstellmittel umfasst.

14. Verfahren gemäß einem vorangehenden Anspruch, wobei die Tinte eine Viskosität im Bereich von 2,5 bis 2,7 mPa·s hat.

## Revendications

1. Procédé permettant de retarder l'apparition de la corrosion ou de réduire la corrosion dans une tête à jet d'encre, comportant des passages pour écoulement d'encre façonnés en un métal contenant du nickel, d'un appareil d'enregistrement par jet d'encre, lequel procédé comporte l'éjection, depuis la tête à jet d'encre, d'une encre qui comprend de l'eau, un agent colorant, et un polymère qui comprend au moins l'un des suivants : un sel de métal alcalin de poly(acide acrylique) et un sel d'ammonium de poly(acide acrylique).

2. Procédé conforme à la revendication 1, dans laquelle le sel de métal alcalin de poly(acide acrylique) comprend des motifs répétés représentés par la formule (1) : 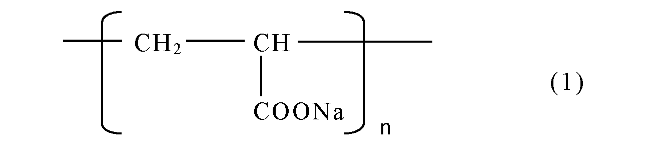 dans laquelle l'indice n est un nombre entier positif,
ou le sel d'ammonium de poly(acide acrylique) comprend des motifs répétés représentés par la formule (2) : 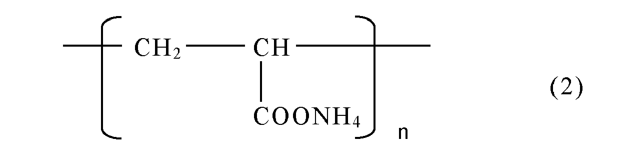 dans laquelle l'indice n est un nombre entier positif.

3. Procédé conforme à la revendication 2, dans laquelle l'indice n est un nombre valant de 20 à 10 000.

4. Procédé conforme à l'une des revendications précédentes, dans lequel la proportion de polymère, en poids rapporté au poids total de l'encre, vaut de 0,01 à 1 %.

5. Procédé conforme à l'une des revendications précédentes, dans lequel l'encre présente un pH de 6 à 9.

6. Procédé conforme à l'une des revendications précédentes, dans lequel le rapport pondéral A/B du polymère (A) à l'agent colorant (B) vaut de 0,002/1 à 0,5/1.

7. Procédé conforme à l'une des revendications précédentes, dans lequel l'encre comprend en outre un dérivé de benzotriazole.

8. Procédé conforme à l'une des revendications précédentes, dans lequel l'agent colorant comprend un pigment.

9. Procédé conforme à la revendication 8, dans lequel le pigment comprend un noir de carbone.

10. Procédé conforme à l'une des revendications précédentes, dans lequel l'encre comprend en outre un tensioactif.

11. Procédé conforme à la revendication 10, dans lequel le tensioactif comprend au moins l'un des suivants : un tensioactif à base d'acétylène-glycol, représenté par la formule (5), et un tensioactif anionique dérivé d'un éther alkylique de polyoxyéthylène, représenté par la formule (6) : 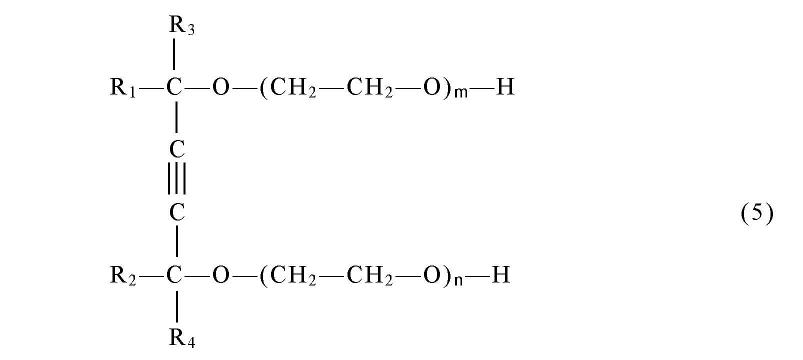 dans laquelle les indices m et n sont des nombres tels que leur somme m + n vaut de 0 à 50, et les symboles R₁, R₂, R₃ et R₄ représentent chacun un groupe alkyle qui comporte de 1 à 5 atomes de carbone et qui est un groupe alkyle à chaîne linéaire ou ramifiée, étant entendu que ces groupes représentés par R₁, R₂, R₃ et R₄ peuvent être identiques ou différents les uns des autres ;
R₅-O-(CH₂-CH₂-O)₁-SO₃M (6)
dans laquelle R₅ représente un groupe alkyle qui comporte de 12 à 15 atomes de carbone et qui est un groupe alkyle à chaîne linéaire ou ramifiée, M représente un ion Na⁺ ou de formule [NH(CH₂CH₂OH)₃]⁺, et l'indice 1 est un nombre qui vaut de 2 à 4.

12. Procédé conforme à l'une des revendications précédentes, dans lequel l'encre comprend en outre un solvant organique hydrosoluble.

13. Procédé conforme à l'une des revendications précédentes, dans lequel l'encre comprend en outre un agent d'ajustement de pH.

14. Procédé conforme à l'une des revendications précédentes, dans lequel l'encre présente une viscosité de 2,5 à 2,7 mPa.s.
